(19) Europäisches Patentamt

European Patent Office

Office européen des brevets

(11) EP 1 598 647 A1

(12) **EUROPEAN PATENT APPLICATION**

(43) Date of publication:
    **23.11.2005 Bulletin 2005/47**

(51) Int Cl.[7]: **G01J 3/28**, G01J 3/453

(21) Application number: **04291290.7**

(22) Date of filing: **19.05.2004**

(84) Designated Contracting States:
    **AT BE BG CH CY CZ DE DK EE ES FI FR GB GR
    HU IE IT LI LU MC NL PL PT RO SE SI SK TR**
    Designated Extension States:
    **AL HR LT LV MK**

(71) Applicant: **ELDIM SA
    14200 Herouville Saint-Clair (FR)**

(72) Inventors:
    • **Leroux, Thierry
      14000 Caen (FR)**

    • **Boher, Pierre
      14114 Ver Sur Mer (FR)**
    • **Luet, Mathieu
      14610 Cairon (FR)**

(74) Representative: **Grünecker, Kinkeldey,
    Stockmair & Schwanhäusser Anwaltssozietät
    Maximilianstrasse 58
    80538 München (DE)**

(54) **Interferometer and fourier transform spectrometer**

(57)    The invention relates to an interferometer comprising, arranged along an axis first n birefringent polarizing beam splitters (26,28), wherein n is a natural number larger than one, preferably two, which are placed in a polarized light beam and which are configured such that the polarized light beam is split into a first and a second beam, which leave the $n^{th}$ polarizing beam splitter essentially parallel to each other and at a first distance to each other, second n birefringent polarizing beam splitters (32,34), which are placed on the axis following the first n birefringent polarizing beam splitters to receive the first and the second beam and which are configured such that the first and the second beam leave the last polarizing beam splitter essentially parallel to each other but at a second distance to each other being smaller than the first distance, and a light sensitive detector (38) for detecting light interference occurring due to phase shifts between the first and second beams, and wherein at least one polarizing beam splitter is movably arranged such that its position perpendicular to the axis can be changed to thereby change the phase shifts between the ordinary and extraordinary beams, and wherein for at least one position of the at least one movably arranged polarizing beam splitter the phase shifts created by the first half of the birefringent polarizing beam splitters and the corresponding phase shifts created by the second half of the birefringent polarizing beam splitters compensate each other at least partially. The invention furthermore relates to a Fourier transform spectrometer comprising the interferometer and to a method for calibrating the Fourier transform spectrometer.

Fig.2b

**Description**

The invention relates to an interferometer which can be used in a Fourier transform spectrometer to measure the spectral characteristics of a light emitting device, in particular a display. The interferometer and the Fourier transform spectrometer both can be used for imaging and/or non imaging applications.

Such a Fourier transform spectrometer is, for example, known from D. Fletcher Holmes and A. Howey, "Birefringent Fourier Transform Imaging Spectrometer", SPIE 4816, 46, 2002 or WO 2004/005870 wherein a Fourier transform spectrometer is disclosed which is illustrated in figure 1, comprising a first polarizer 1, a first Wollaston prism 3, a second Wollaston prism 5, a second polarizer 7, a lens 9 and an imaging detector 11. The elements are sequentially arranged on an axis 13. One of the Wollaston prisms is moveably arranged so that its position perpendicular to the axis 13 can be altered. Such a spectrometer is less sensitive to vibrations than the classical Michelson interferometer.

Such a state of the art spectrometer functions in the following way. Light from a light emitting object, e. g. a display is polarized by the polarizer 1 and then enters the first Wollaston prism 3 such that an ordinary and an extraordinary beam is created which are travelling through the Wollaston prisms at different speed, thereby creating a phase shift. Due to refraction the beams get split and leave the first Wollaston prism under different angles. After having travelled through the second Wollaston prism both rays are again parallel to each other, but spatially separated, and leave the second Wollaston prism 5 under the same angle $\alpha$, under which it has entered the first Wollaston prism. After having travelled through the second polarizer 7, extracting the common polarization of the two rays, they can interfere with each other. The lens 9 is used to focus both rays onto the imaging detector where an interference pattern can be detected. The advantage of this kind of use of the described arrangement is that independent of how the rays enter the two prisms 3,5, the rays get out of the Wollaston prisms 3,5 under the same angles.

This spatially extended interference pattern can then be analysed by carrying out a Fourier transform to obtain spectral information about the light entering the device. To carry out the Fourier transform it is necessary to determine for each resolved measured intensity of the interference pattern the corresponding phase shift. This can practically be achieved only for light entering the device in a parallel way or with a small angle of view, which is of the order of 5°. Due to this reduced angle of view, the sensitivity of the device is not optimised, as by the field of view reduction the amount of light entering the device is reduced.

Furthermore by moving one of the Wollaston prisms relative to the axis 13 the interference pattern, detected by the detector 11, changes. By measuring and storing a predetermined number of interference patterns for different positions of the movable Wollaston prism a Fourier transform can be calculated for each pixel of the imaging detector, and thus this form of spectrometer can also be used as an imaging spectrometer to characterize the spectra of an entire display, by creating a spectral image.

In this case the phase shift introduced between the two rays is a function of the Wollaston wedge angles, the difference in refractive index for the ordinary and extraordinary ray inside the birefringent material used, and of the change in relative position of the movably arranged Wollaston prism. In addition to the phase shift due to the translation of the Wollaston prism, there is a further phase shift in case of a non-normal angle of incidence. The angular dependence is usually of a hyperbolic form. As a result the zero phase shift position varies hyperbolically. Thus the origin of each interferogram is dependant on the position of the pixel of the detector.

The zero phase shift position needs to be known to be able to carry out the Fourier transform for the pixels of the detector on which the spectral analysis is going to be performed. With a state of the art imaging spectrometer it is thus necessary to perform a calibration to identify for each pixel the of the movable Wollaston with respect to the axis at which zero phase shift is achieved. Only then the interferograms can be measured and analysed. In practice this is a time-consuming process and furthermore, due to the presence of numerous fringes in the pattern, relatively difficult to carry out.

One way to overcome this problem is, like described above, to reduce the field of view of the spectrometer, however, thereby intensity and information about the light emitting object is lost. Furthermore in order to let extraordinary and corresponding ordinary rays interfere with each other, after having passed through the second polarizer, a lens is needed to recombine the laterally shifted beams onto one pixel.

It is therefore the object of the present invention to improve the angular acceptance of the interferometer and the Fourier transform spectrometer and to facilitate at the same time the calibration of the interferometer and the Fourier transform spectrometer.

This object is solved with the interferometer according to claim 1.

Thus in total 2n, with n being a natural number larger than 1, polarizing beam splitters are provided and placed in a polarized light beam such that the light enters the first polarizing beam splitter of the first n polarizing beam splitters and leaves the last polarizing beam splitter of the second n polarizing beam splitters to be detected by the light sensitive detector.

Furthermore the first n birefringent beam polarizing beam splitters are configured and arranged such that due to birefringence and refractive effects the light beam entering the interferometer is split into a first and a second beam, and leaves the last polarizing beams splitter (the nth) in parallel and spaced from each other at a first distance.

The second n birefringent polarizing beam splitters are configured and arranged such that again due to birefringence and refractive effects the two beams leave the last polarizing beams splitter again parallel, but spaced from each other at a second distance, being smaller than the first one.

By moving the at least one polarizing beam splitter perpendicular to the axis on which the polarizing beams splitters are arranged a position can be found for which the interference pattern shows a minimum amount of fringes, in particular no fringes, which is due to the at least partial compensation of the phase shifts, of the two beams with respect to each other, created by the first n polarizing beams splitters by the phase shift created by the second n polarizing beam splitters. This position is achieved for a symmetrical arrangement of the 2n polarizing beam splitters with respect to the light path, that is, they are all arranged in a line on the axis.

With the successive arrangement of the polarizing beam splitters, the unwanted effect that each interferogram has a varying origin depending on the position with respect to the axis, can therefore be reduced. Thus the range in which the origin has to be looked for, can be reduced.

Furthermore, as the different origins are now closer together it is also possible to increase the angular acceptance and thus the field of view of the interferometer.

By scanning the at least one of the polarizing beam splitters, changing interferograms can be measured by the detector, from which a spectral analysis can be carried out using Fourier transformation.

Advantageously the 2n birefringent polarizing beams splitters can be configured such that the first and second beams leave the nth polarizing beam splitter and the last polarizing beam splitter under essentially the same angles as the polarized beam enters the first polarizing beam splitter. In this case the second half of the polarizing beam splitters can have a similar structure to the first half, with the difference being that the shifts created in the first and second half shall have opposite sign, so that the compensation of the phase shifts in the second half of the polarizing beam splitters can be further optimised.

Preferably, at least one polarizing beam splitter is a Wollaston prism and even more preferably each polarizing beam splitter is a Wollaston prism. Usually Wollaston prisms have mutually orthogonal optical axes, however in the scope of the invention a deviation from this fact is possible. The wedge angle of the Wollaston prisms can be obtained out of a balanced choice taking into account the amount of phase shift one wants to achieve with a certain change in position of the at least one movably arranged Wollaston prism. The larger the wedge angle the larger the phase shift observed, but in this case also the overall size of the Wollaston prisms needs to be larger. Furthermore the larger the difference in refractive index of the ordinary and the extraordinary rays, the smaller the wedge angle can be chosen.

Any birefringent material can be used to build the Wollaston prisms, however, the most commonly used are magnesium fluoride, calcite, potassium dihydrogen phosphate (KDP), ammonium dihydrogen phosphate (ADPp), quartz or LiNb03. The use of Wollaston prisms is in particular advantageous due to their high dispersive properties with respect to the extraordinary and ordinary rays. However, also Senarmont or Rochon type prisms may be used.

Advantageously the Wollaston prisms of the first n polarizing beam splitters are made out of a same birefringent material and the Wollaston prisms of the second n birefringent polarizing beam splitters are made out of a same birefringent material. This will keep the structure of the interferometer simple, in particular when all Wollaston prisms are made out of the same material.

According to a further preferred embodiment the interferometer can furthermore comprise at least one polarization plane changing means, in particular a half wave plate. Advantageously a polarization plane changing means can be placed on the axis such that the first n Wollaston prisms are to one side of the polarization plane changing means and the second n Wollaston prism are to the other side of the polarization changing means. As a half wave plate turns the polarization plane by 90° the interferometer can further be improved as, in order to better compensate the phase shift created in the first half, the Wollaston prisms of the second half can have the same structure, e.g. the same material, wedge angle and thickness, and arrangement as the first half of the Wollaston prisms.

In a further preferable embodiment the first n Wollaston prisms can be made out a first birefringent material and the second n Wollaston prisms can be made out of a second birefringent material having birefringent properties of opposite sign compared to the first one. The differences in birefringent properties can be advantageously used to enable the compensation of the occurring phase shifts for at least one position of the at least one movably arranged polarizing beam splitter without using a half wave plate. This is as, actually, in one half of the Wollaston prisms the phase shift created between ordinary and extraordinary rays will be positive and in the other half the phase shift created will be negative and therefore the phase shifts can compensate each other at least partially. In the case that the absolute value of the difference in the refractive index between the ordinary and the extraordinary ray is not identical for the two materials, the wedge angles and thicknesses of the prisms with negative birefringent material need to be optimised such that the induced phase shift corresponds, at least partially, (with opposite sign) to the phase shift arising due to the wedge angle of the positive refractive materials.

According to a preferable embodiment for which n=2, the wedge angles of the 1st (the first of the first n Wollaston prisms) and 3rd (the first of the second n Wollaston prisms) Wollaston prisms can be essentially the same and the wedge angles of the 2nd (the last of the first n Wollaston prisms) and 4th (the last of the first n Wollaston prisms) Wollaston prisms can be essentially the same with respect to the axis, and, in particular, the absolute value of all angles can be essentially the same with respect to the axis. Using Wollaston prisms of this type has the advantage that to the one hand phase shift compensation is further improved due to symmetry and to the other hand the fabrication of the prisms is facilitated.

Advantageously the light sensitive detector can comprise a plurality of pixels, in particular in a one-dimensional or two-dimensional manner, for detecting a spatially extended interference pattern. Such an interferometer can thus at the same time measure interference effects for different spatial positions which can advantageously be used to characterize the spectral properties of a whole display, or the like, which is, in particular, useful for imaging. For a non imaging application also a zero dimensional detector like a photodiode can be used

The object of the invention is furthermore achieved with an interferometer according to claim 10.

In comparison with the interferometer according to claim 1, the polarizing beam splitters of the interferometer according to claim 10 do not have to be movably arranged, however at least one polarizing beam splitter is displaced with respect to the axis, such that an interferogram with fringes is observable with the light sensitive detector.

Furthermore the first n birefringent beam polarizing beam splitters are configured and arranged such that due to birefringence and refractive effects the light beam entering the interferometer is split into a first and a second beam, and leaves the last polarizing beams splitter (the nth) in parallel and spaced from each other at a first distance.

The second n birefringent polarizing beam splitters are configured and arranged such that again due to birefringence and refractive effects the two beams leave the last polarizing beams splitter again parallel, but spaced from each other at a second distance, being smaller than the first one.

Furthermore the second n birefringent polarizing beam splitters are configured and arranged such that in the direction being perpendicular to the axis along which the beam splitters are arranged and being perpendicular to the direction in which the at least one polarizing beam splitter is displaced with respect to the axis no interference fringes are produced. This is achieved by a compensation, with respect to this direction, of the phase shifts created in the first n polarizing beam splitters by the phase shift created in the second n polarizing beam splitters

Due to the proposed arrangement of the polarizing beam splitters and the compensation of phase shifts in one direction the angular dependency of the phase shift in the direction perpendicular to the axis and perpendicular to the direction in which the splitter is displaced is small, and therefore the angular acceptance can be enhanced compared to the state of the art interferometer. Thus the field of view can be increased.

This interferometer, for which one polarizing beam splitter has been put out of symmetry to create a certain quantity of phase shift dependency, can advantageously be used to extract spectral information in the case of a punctual source analysis using a one or two dimensional detector or in the case of a slit part of an extended source using a two dimensional detector.

The interferometer can furthermore be realised according to any of the above mentioned advantageous embodiments of the interferometer according to claim 1 or according to any combination thereof.

The invention furthermore relates to a Fourier transform spectrometer according to claim 11, comprising the above-described interferometer and a means for carrying out a Fourier transform. The Fourier transform spectrometer comprising the inventive interferometer thus takes advantage of the fact that the zero phase shift position of the at least one movably arranged polarizing beam splitter can be easily obtained. In addition thanks to the higher angle of view the sensitivity of the Fourier transform spectrometer is enhanced.

Advantageously the Fourier transform spectrometer can furthermore comprise means for storing the interferences obtained for a plurality of different positions of the at least one movably arranged birefringent beam splitter. Thus following the acquisition of a predetermined number of interference patterns as a function of the position of the at least one movably arranged polarizing beam splitter, the Fourier transform and thus the spectrum of a light source, like for example a display, can be obtained in a less complicated way.

According to an advantageous embodiment the Fourier transform spectrometer can comprise a light sensitive detector with a plurality of pixels, in particular in a one-dimensional or two-dimensional manner, for detecting a spatially extended interference pattern. Furthermore the means for carrying out a Fourier transform can be configured such that the Fourier transform is determined for at least two pixels, in particular one in a centre region of the light sensitive detector and at least one in an edge region of the light sensitive detector. With this Fourier transform spectrometer, imaging can be carried out such that spectral information obtained for the different locations can be compared with each other, in view of identifying for example the quality of a display.

The invention further relates to a method for calibrating a Fourier transform spectrometer as described above which comprises the step of moving the at least one movably arranged polarizing beam splitter to a different position until a minimum amount of fringes, in particular no fringe, is detected by the light sensitive detector. This position corresponds to the origin of the Fourier transform used to extract spectral information.

As the arrangement with the 2n birefringent polarizing beam splitters, n being a natural number greater than 1, allows to at least partially compensate the phase shift created by the first n birefringent polarizing beam splitters, by the phase shift created due to the second n birefringent polarizing beams splitters and that furthermore an additional phase shift can be created by moving the at least one movably arranged polarizing beam splitter with respect to the axis on which the components are arranged, there will be at least one position for which the amount of fringes is minimum.

The Fourier transform spectrometer according to the invention comprising the inventive interferometer can be used for analysing a punctual light source or an extended light source at finite or infinite distance. In the case the Fourier transform spectrometer comprises a further imaging optical system, the later can be placed before or after the interferometer. As the Fourier transform spectrometer has an enhanced field of view all kinds of light sources can be analysed in an imaging or non-imaging mode.

Advantageous embodiments of the invention will be described in the following with respect to the accompanying drawings:

Fig. 1 illustrates schematically a prior art interferometer with two Wollaston prisms;

Fig. 2a illustrates schematically an inventive interferometer according to a first embodiment comprising four Wollaston prisms with a half wave plate in the middle;

Fig. 2b shows the interferometer of the first embodiment according to the invention wherein the first Wollaston prism is displaced with respect to the axis on which the Wollaston prisms and the half wave plate are arranged;

Fig. 3 shows two examples of interference patterns obtained by the interferometer according to the invention for two different positions of the at least one movably arranged polarizing beam splitter and an example of an interference pattern obtained by the prior art interferometer;

Fig. 4 illustrates schematically a third embodiment of the interferometer according to the invention wherein another arrangement of the Wollaston prisms is used;

Fig. 5 illustrates schematically a fourth embodiment of the interferometer according to the invention wherein use is made of two different birefringent materials, one positive and the other one negative;

Fig. 6 illustrates schematically a fifth embodiment of the interferometer according to the invention, based on the fourth embodiment, wherein another arrangement of the Wollaston prisms is used;

Fig. 7 illustrates schematically a first embodiment of a Fourier transform spectrometer according to the invention comprising an interferometer according to the invention;

Fig. 8 illustrates a fifth embodiment of the interferometer according to the invention, wherein one of the polarizing beam splitters is displaced with respect to the remaining polarizing beam splitters.

Fig. 2a illustrates, schematically, a first embodiment of an interferometer 20 according to the invention. The interferometer 20 comprises, arranged along an axis 22, a first Wollaston prism 26, a second Wollaston prism 28, a third Wollaston prism 32, a fourth Wollaston prism 34 and a light sensitive detector 38.

In the illustrated embodiment the first Wollaston prism 26 is movably arranged such that its position can be changed relative to the axis 22 in the direction x, which is depicted by arrows 40a and 40b. However, also any other of the Wollaston prisms could be movably arranged. The movement is essentially perpendicular to the axis 22 and in the plane of the figure.

The optical elements are chosen such that the interferometer 20 can be used in the visible light range. Nevertheless by adapting the materials the device could also be used in the infrared or ultraviolet regime.

To be capable to analyse unpolarized light, the interferometer 20 can further comprise a polarizer 24, placed in front of the first Wollaston prism 26, to polarize light coming from a light source (not shown) and an analyser 36, placed behind the fourth Wollaston prism 34.

The polarization plane of the polarizer 24 is arranged such that, when the polarized light enters the first Wollaston prism 26, an extraordinary and ordinary ray is created inside the Wollaston prism. Preferably the intensities of the ordinary and extraordinary ray should be essentially equal. This means that the polarization plane of the polarizer 24 shall be at about 45° with respect to the optical axis of the first wedge 26a of the Wollaston prism 26. Furthermore the analyser 36 is arranged such that its polarization plane is preferably either parallel to the one of the polarizer 24 or perpendicular to the one of the polarizer 24 to filter out the common polarization plane of the extraordinary and ordinary rays to enable an interference between the two.

In this embodiment the four Wollaston prisms 26, 28, 32 and 34 are all made from the same birefringent material. Furthermore the wedge angles $\theta_1$, $\theta_2$, $\theta_3$ and $\theta_4$ with respect to the axis 22 are essentially equal. In this embodiment the direction of the optical axis of the two wedges 26a, 26b, 28a, 28b, 30a, 30b, 32a, 32b building up the four Wollaston prisms 26, 28, 32, 34 are essentially perpendicular to each other and also to the axis 22. In the figures the optical axis is either depicted by a flash 42, meaning the axis is in the plane of the figure, or by a dot 44, meaning that the axis is perpendicular to the plane of the figure. In this embodiment the first and third Wollaston prism 26, 32 are arranged in the same way and also the second and fourth Wollaston prism 28, 34 are arranged in the same way.

In a practical example the prisms have a cubic form with about 40mm of length and wedge angles θ1, θ2, θ3 and θ4 of about 16° in the case MgF2 or calcite is used as birefringent material. Usually the angle is chosen as a function of the difference of the refractive index of the ordinary and the extraordinary ray and the overall size of the Wollaston prisms. Other materials than magnesium fluoride or calcite like ADP, KDP, quartz or LiNbO3 can also be used as birefringent material to build up the Wollaston prisms.

In this embodiment the optical axis of the wedge of a first Wollaston prism, for example prism 26, on the light emergent side 26b of the Wollaston prism and the optical axis of the following Wollaston prism, in this example Wollaston prism 28, on the light incident side 28a are essentially in parallel. The same is also true for Wollaston prisms 28 and 32 and 32 and 34

Eventually, in a variant, the wedges 32b and 34a of the third and fourth Wollaston prism could be made out of one block of birefringent material, which would reduce the number of interfaces and would also facilitate the manufacturing of these elements.

A half wave plate 30, preferably an achromatic half wave plate, is placed in between the second Wollaston prism 28 and the third Wollaston prism 32.

The light sensitive detector 38 detecting light interference patterns occurring due to phase shifts between the ordinary and extraordinary beams created inside the birefringent polarizing beam splitters 26, 28, 32, 34, is positioned on the axis 22 following the analyser 36. Use can, for example, be made of a CCD detector having a two-dimensional array of pixels, such that imaging interferometry can be carried out and depending of the application also a one-dimensional detector, a non spatially resolving detector or any other kind of suitable detector could be used.

In the following the way light rays travel through the interferometer 20 will be described in detail. By light ray is understood a single light ray and the sum of light rays will create the light beam entering the interferometer 20. The light paths shown in Fig. 2a are illustrative only and do not exactly follow Snell's law.

First of all, a ray A travelling on the axis 22, thus parallel to the axis, is described. The light passes the polarizer 24 to become polarized and then enters the first Wollaston prism 26. The polarization plane of the polarizer 24 is chosen such that it is at about 45° with respect to the optical axis 44 of the first wedge 26a of the Wollaston prism 26 Thus an ordinary and an extraordinary ray are created. As the light beam A hits the first wedge 26a of the first Wollaston prism 26 at 90° no refractive effect will occur and thus there will be no spatial separation between the two rays in the first wedge 26a.

At the first interface 46 of the first Wollaston prism 26 the two rays are separated from each other (A2 represents the ray with its E field perpendicular to the plane of the figure, illustrated by a dot on the A2 ray) and A1 represents the ray with its E field in the plane of the figure illustrated by an arrow) due to refraction, as the ray A hits the interface 46 at an angle of (90°-θ1), wherein θ1 is the wedge angle of prism 26.

The two rays A1 and A2 then enter the second Wollaston prism 28. Hardly any refractive effect occurs as the optical axis of the second wedge 26b of prism 26 and the optical axis of the first wedge 28a of prism 28 are essentially in parallel. Due to refraction at the interface 48 of the second prism 28 the two rays A1 and A2 become again parallel to the axis 22, they do, however, travel with a lateral displacement at a distance d1 with respect to each other. At the exit of the second Wollaston prism 28 the two rays A1 and A2 have a certain phase shift with respect to each other, which is due to the difference in path length they were travelling through as an ordinary and extraordinary ray.

The two rays A1 and A2 then pass the half wave plate 30 which changes for each ray A1 and A2 the polarization plane by 90°. Thus the E field of ray A1 becomes perpendicular to the plane of figure 2a and the E field of ray A2 lies in the plane of the figure (depicted by the dot for ray A1 and the arrow for ray A2).

After the half wave plate 30, the rays A1 and A2 enter the first wedge 32a of the third Wollaston prism 32 and at the interface 52 of the third Wollaston prism 32 refraction occurs again due to the change in the direction of the optical axis for the two wedges 32a and 32b. This time, however, as the polarization planes of rays A1 and A2 have been exchanged by the half wave plate 30, the two rays A1 and A2 converge. They essentially meet each other at the wedge interface 54 of the fourth Wollaston prism 34 where they are refracted such that they propagate essentially in parallel to and on the axis 22, thus essentially without a lateral displacement between the rays.

Both rays A1 and A2 then travel through the analyser 36 where the common polarization plane of the two rays A1, A2 is filtered out, such that both rays can interfere. The interference is then detected by the detector 38. However, as actually the phase shift between ray A1 and A2 created in the first two Wollaston prisms 26, 28 (e.g. phase A1 minus phase A2), is essentially opposite to the phase shift occurring in the third and the fourth Wollaston prisms 32, 34, due to the symmetry created by the change of the polarization plane due to the half wave plate 30, the phase shifts compensate each other to a great extent and in a perfect system would even annihilate each other, thus ray A1 and A2 leave the fourth prism 34 essentially in phase and thus constructive interference occurs.

If the detector 38 together with the analyser 36, was placed behind the second Wollaston prism 28, like in a state of the art interferometer a phase difference would be present such that if interference occurred this would be either constructive or destructive depending on the phase shift.

In the following ray B, also parallel to, but at a certain distance d2 with respect to the middle axis 22, will be described in detail. As can be seen by comparison with the rays A1 and A2, the rays B1 and B2 travel essentially the same distance as ordinary and extraordinary rays and therefore after the Wollaston prisms 26, 28, 32, 34, also essentially without a phase difference.

A third ray C impinges on the first Wollaston prism 26 under an angle $\alpha$ with respect to the axis 22. Due to this angle $\alpha$ the ray C separates into two rays C1, C2 which is due to the difference in refractive index of the ordinary and the extraordinary rays. At the first interface 46 and second interface 48 further refractive effects occur and when the rays C1 and C2 leave the second Wollaston prism 28, they propagate under essentially the same angle $\alpha$ with respect to the axis 22, but at a certain lateral displacement d3 (first distance) with respect to each other. After having travelled through the half wave plate 30 the two rays C1, C2, having changed their polarization plane, enter the third Wollaston prism 32. Due to the refractive effects occurring at the various interfaces: at the entrance of the third Wollaston prism 32, at the interface 52 of the Wollaston prism 32, at the interface 54 of the fourth Wollaston prism 34 and at the exit of the fourth Wollaston prism 34, the rays C1 and C2 are again essentially combined into one ray and leave the prism 34 under the angle $\alpha$ with respect to the axis 22. Compared to the prior art interferometer the lateral displacement (second distance) between the two rays after leaving the fourth Wollaston prism is decreased, such that they can interfere with each other in one pixel of the CCD detector 38.

Again due to the symmetric arrangement of the prisms together with the half wave plate 30 in between, the phase shift occurring due to the first two Wollaston prisms 26, 28 is compensated by the following third and fourth Wollaston prisms 32, 34, and in the ideal case a complete compensation such that the phase shift difference is equal or close to zero, takes place. Therefore even for ray C impinging under an angle different from 90° rays C1 and C2 are in phase, just as for the rays A and B. If again, the detector 38 together with the analyser was placed right after the second Wollaston prism 28, rays C1 and C2 would have a certain phase shift with respect to each other and depending on the angle the interference pattern would change.

Thus in an arrangement with four birefringent polarizing beam splitters, all arranged in a row, each made out of the same material, having the same wedge angle, compensation between the phase shift occurring in the first half of the polarization beam splitters and the second half of the polarization beam splitters can be optimised, such that a zero phase shift or at least nearly zero phase shift is obtained at the exit of the last Wollaston prism 34 independently of the angle of the incident $\alpha$ and the height d2 under which the rays enter the first Wollaston prism 26. In this case the detector 38 detects a zero fringe pattern or at least a pattern without strong intensity variations.

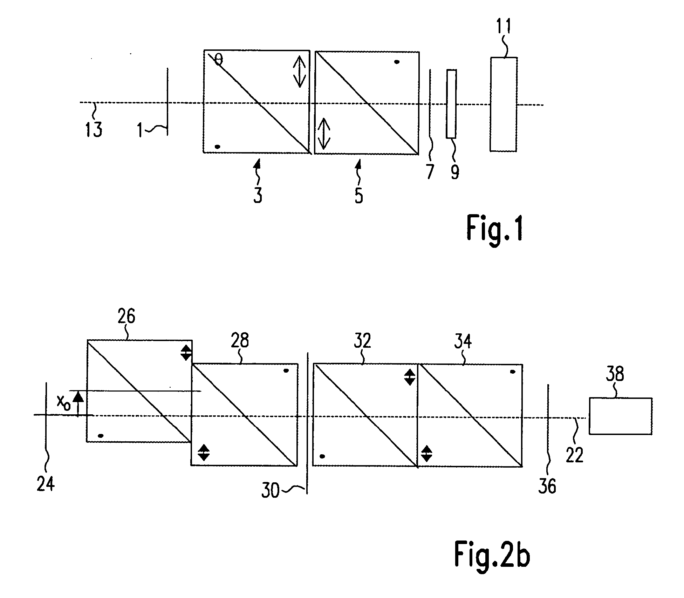

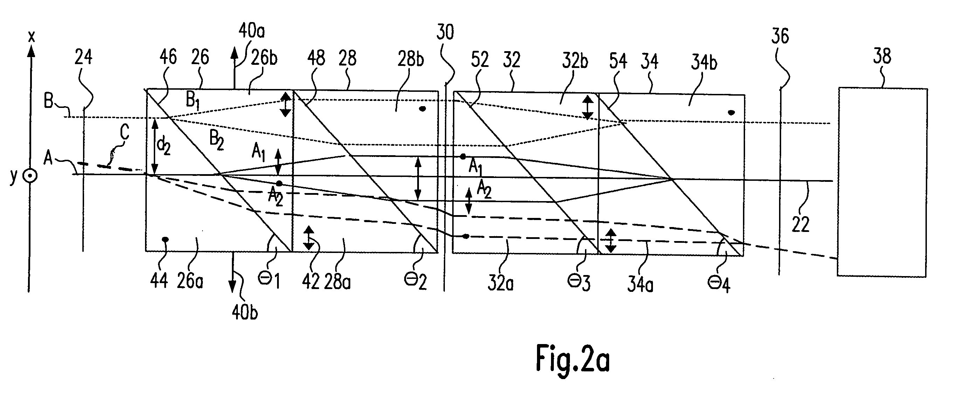

In order to create phase shifts such that the image detected by the detector 38 changes, the at least one movably arranged polarizing beam splitter, in this case the Wollaston prism 26, is displaced by an amount $x_0$ along the x direction with respect to the axis 22. This displacement is illustrated in Fig. 2b which represents the interferometer as shown in Fig. 2a, with the only difference being that Wollaston prism 26 has been moved by the amount $x_0$. The other elements correspond to the ones described in Fig. 2a and are their detailed description is thus not repeated again. In this embodiment only prism 26 is movably arranged, however, without departing from the invention also another prism or more than one prism could be moved.

With respect to the zero phase shift position ($x_0 = 0$, see Fig. 2a) a phase shift will be observed between rays A1 and A2 as well as rays B1 and B2 at the exit of the last Wollaston prism 34 which is linearly dependent on the displacement in direction x. More precisely the phase shift is of the order of

$$\delta(x) = 2x_0 \ (n_e\text{-}n_o) \ \tan\theta \qquad \text{equation (1)}$$

Like in the case of the interferometer with only two Wollaston prisms the phase difference will in addition contain a dependency on the view angle, thus the angle $\alpha$ under which a ray enters the Wollaston prisms (like ray C).

Unlike the case with only two Wollaston prisms the position of zero phase shift is achieved for $x_0 = 0$ independently of angle and incident height, and therefore a Fourier transform can be easier obtained than with the prior art interferometer.

Furthermore the arrangement as shown in Figs. 2a and 2b has the advantage that due to the fact that on the light emergent side the last Wollaston prism 34 the ordinary and corresponding extraordinary rays have a smaller lateral displacement than in the prior art interferometer no additional lens system is needed to realize the interference between those two rays after having travelled through the analyser 36.

As furthermore due to the fact that the origin for the Fourier transform is known from the position for which the Wollaston prisms have a symmetric arrangement ($x_0 = 0$) it will be possible to allow a larger field of view, of more than 10° usually of up to 25° or more than in comparison with the state of the art interferometer having a relatively low field of view of about 5°.

In a practical example the four Wollaston prisms 26, 28, 32, 34 have been fabricated out of magnesium fluoride MgF2. With such an arrangement the following interference patterns have been observed with a two dimensional CCD type detector.

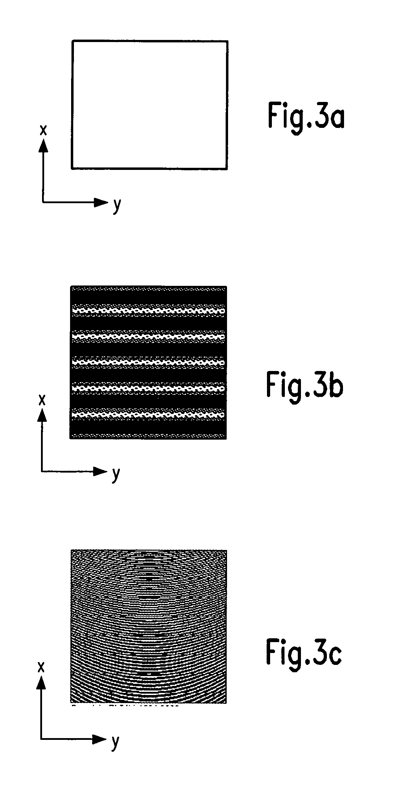

Fig. 3a shows a picture obtained by the detector 38 for a prism position $x_0$=0, thus the symmetric case represented in Fig. 2a. Accordingly no fringes are observed and the measured intensity is essentially constant over the whole measured area. Thus the position $x_0$=0 corresponds to the zero phase shift position. When the movably arranged Wollaston prism is then moved by a certain amount $x_0$ a fringe pattern is observed, as illustrated in Fig. 3b, which is due to the created phase shifts. On the detector the intensity is changing in the same direction (x direction) as the one in which the displacement of the Wollaston prism takes place, and is constant in the direction perpendicular (y direction). The larger the $x_0$ value, the more fringes will appear in the x direction. As a comparison Fig. 3c illustrates an interference pattern obtained for $x_0$=0 with a prior art interferometer only employing two Wollaston prisms. Instead of having a zero fringe picture for $x_0$=0 more than fifty fringes are observed. Furthermore fringes are present as well in the x direction as in the direction perpendicular. Thus the analysis to identify the zero phase shift position for each pixel becomes by far more complicated.

The interferometer illustrated in Figs. 2a and 2b is only one example of how the invention can be realized. Further embodiments will be described in the following

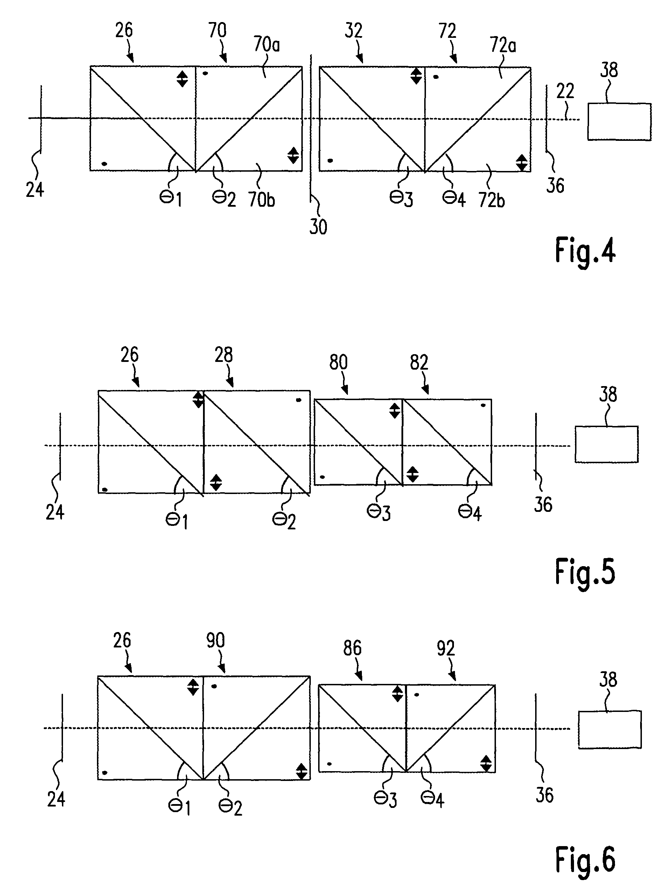

Fig. 4 illustrates a second embodiment of an interferometer according to the invention. Elements of this embodiment having reference numerals which have already been used in the description of the first and second embodiment will not be explained in detail again, as they do have the same properties as described earlier. Actually in this embodiment the polarizer 24, the first Wollaston prism 26, the half wave plate 30, the third Wollaston prism 32, the analyser 36 and the detector 38 correspond to the ones already disclosed with respect to the first embodiment.

With respect to Fig. 4 the second Wollaston prism 28 and the fourth Wollaston prism 34 have been replaced by a new second Wollaston prism 70 and a new fourth Wollaston prism 72. Those prisms 70, 72 are made out of the same material as prisms 28 and 34, but the wedge angles θ2 and θ4 are opposites with respect to the axis 22, thus having the same absolute value but different sign. Due to this the directions of the optical axis in the first wedges 70a, 72a and in the second wedges 70b, 72b also have to be different. The optical axis of the light incident wedges 70a, 72a of the prisms 70, 72 are now perpendicular to the plane (depicted by dots), whereas previously they were lying in the plane perpendicular to the axis 22, and the optical axis on the light emergent wedges 70b, 72b of the prisms 70, 72 are now lying in the drawing plane (depicted by arrows).

The arrangement shown in Fig. 4 essentially has the same properties as the one of Fig. 2a, namely, a ray entering the first prism 26 under a certain angle will leave the second prism 70 under the same angle, but the two rays created inside the prisms due to refraction will have a certain phase shift with respect to each other and will be have a certain lateral displacement. After having traveled through the third and the fourth Wollaston prism 32, 72 those two rays will then essentially be combined together again and for a displacement position of the movable Wollaston prism 26 of $x_0$=0 compensation of the phase shifts will occur so that again, as in the case of Fig. 2a, a zero fringe pattern will be obtained.

Like in the case of embodiment one, at least one of the Wollaston prisms 26, 70, 32, 72 is movably arranged so that the phase relation can be changed by introducing an asymmetry in the path. Thus, dependent on the position of the movably arranged prism(s), changing interference patterns can be obtained and a Fourier transform can be carried out.

Fig. 5 illustrates a third embodiment of an interferometer according to the invention. Elements of this embodiment having reference numerals which have already been used in the description of the first and second embodiment will not be explained in detail again, as they do have the same properties as described earlier.

In this third embodiment the polarizer 24, the first and the second Wollaston prisms 26, 28, as well as the analyser 36 and the detector 38 are corresponding to the ones described with respect to the first embodiment. The difference with respect to the earlier embodiments is that the third and fourth Wollaston prisms 80, 82 are made of a birefringent material having a birefringent behaviour which is opposite in sign to the one of the material of the first and second prisms 26, 28. That is, for example, when the first and second prism 26, 28 are made out of a positive birefringent material, such as magnesium fluoride, the third and fourth prism 80, 82 are made of a negative birefringent material such as, for example, calcite. Thus there is no need to provide a half wave plate in the middle of the Wollaston prisms as due to the difference in birefringent character the phase shift created in the first half is at least partially compensated in the second half when the movably arranged first Wollaston prism 26 is at the $x_0$=0 position. Ideally the difference in refractive index of the negative birefringent material is exactly the opposite to the difference in refractive index of the positive birefringent material, as then the wedge angles as well as the width of the four Wollaston prisms could have the same value to achieve complete or at least nearly complete compensation of the phase shifts.

However, usually the birefringent properties do not match and as a consequence the wedge angles θ3 and θ4 as well as the thickness of the third and fourth Wollaston prisms (80, 82) need to be adapted such that an optimised compensation of the phase shifts is achieved. This choice will depend of the materials and the field of view used. Preferably the wedge angles θ3 and θ4 are chosen to be equal to θ1 and θ2.

This embodiment has the advantage that the achromatic half wave plate 30 is no longer necessary, so that the number of optical elements necessary is reduced.

Fig. 6 shows a fourth embodiment of an interferometer according to the invention. Elements of this embodiment having reference numerals which have already been used in the description of the first to fourth embodiment will not be explained in detail again, as they do represent the same properties as described with respect to the previous embodiments. Actually the polarizer 24, the first Wollaston prism 26, the analyser 36 and the detector 38 are common with the other embodiments. Like in the fourth embodiment, two different materials are used for the first and second Wollaston prisms 26, 90 and the second Wollaston prisms 80, 92. Herein the third Wollaston prism 80 corresponds to the one employed in the previously described embodiment illustrated in Fig. 5.

As for the second embodiment, illustrated in Fig. 4, also the fourth embodiment uses a different arrangement of the Wollaston prisms, namely the second Wollaston prism 90 and the fourth Wollaston prism 92 have an opposite wedge angle θ2, θ4 with respect to the wedge angles θ1, θ3 of the first and third Wollaston prisms 26, 80. Due to this, the direction of the optical axis of the second and fourth Wollaston prism wedges are inversed, namely, on the light incident side the optical axis is perpendicular to the plane and on the light emergent side of the Wollaston prisms 90, 92 the optical axis is lying in the plane essentially perpendicular to the axis 22.

The way rays will travel through this arrangement are essentially the same as previously described with respect to third embodiment illustrated in Fig. 5. Thus the same advantages can be achieved, namely, there is no need for a half wave plate.

All described embodiments have in common that for at least one position of the at least one movably arranged Wollaston prism the arrangement of the different elements shows a certain symmetry such that the phase shift occurring in one part of the optical elements is compensated for, at least partially, by the remaining optical elements. From this position the zero phase shift position can easily obtained for each point at which an interference pattern wiii be measured, in particular in the case the patterns are used in a Fourier transformation calculation, described in the following.

According to further variants, instead of four polarizing beam splitters also six, eight or even more splitters may be used. Furthermore each beam splitter could be made out of a different material, in this case the wedge angles need to be adapted accordingly.

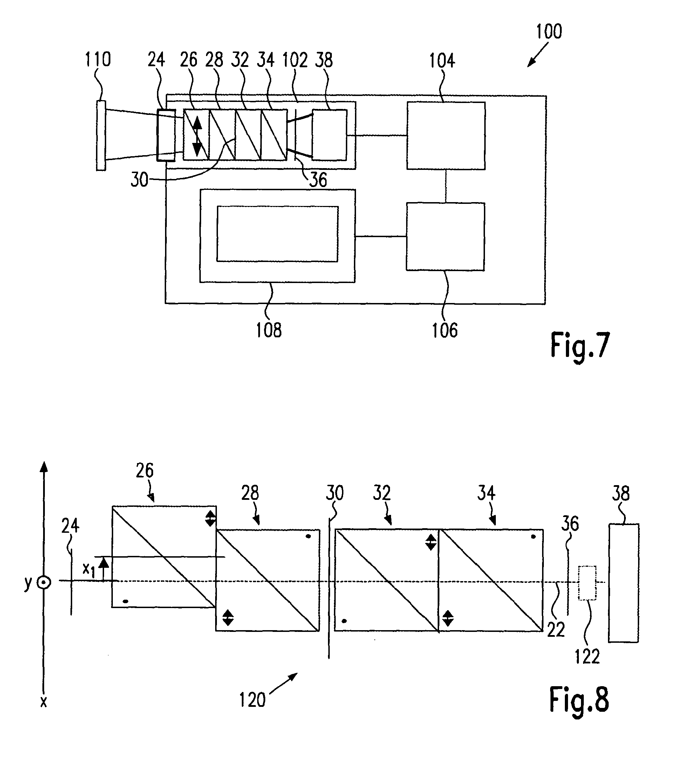

A Fourier transform spectrometer 100 will be described in detail with respect to Fig. 7. It comprises an interferometer 102 according to the invention which can be, for example, one according to the embodiments shown in Figs. 2, 4, 5 or 6,. Again elements with the same reference numerals as in the preceding Figures will not be explained again in detail and their earlier made description is incorporated herewith by reference.

The spectrometer 100 further comprises a means for storing the interference patterns 104 collected by the detector 38 of the interferometer 102 and a means for carrying out a Fourier transform 106. In addition the Fourier transform spectrometer may comprise an output device 108 to output the result of the Fourier transform and/or to output the interference pattern directly measured by the detector 38. This is of particular interest during calibration of the Fourier transform spectrometer 100. In a variant the output device 108 may also be an external output device such as, for example, a computer display in which case the spectrometer 100 will comprise a suitable interface to connect such an outside output device.

The Fourier transform spectrometer 100 can be used to obtain spectral information of a device 110 placed in front of the interferometer 102 and the spectrometer 100. Light emitted from the device 110, which can, for example, be a display, travels through the polarizer, the four Wollaston prisms 26, 28, 32, 34, the half wave plate 30 and the analyser 36. The obtained interference pattern is then detected by the light sensitive detector 38. The interference pattern is stored in the storing means 104, and in a subsequent step the movably arranged Wollaston prism, in this embodiment prism 26, is moved such that phase shifts arise, as previously described, to alter the interference pattern. The newly obtained interference pattern is again stored in the means for storing 104. These steps are repeated until the necessary amount of interference measurements have been carried out to obtain the required spectral resolution of the Fourier transform. After the acquisition of the predetermined number of interference patterns the Fourier transform can be numerically calculated.

With this spectrometer the Fourier transformation can be determined for a predetermined amount of pixels independently of each other. Thus for each pixel analysed a spectrum is achieved representing the wavelength dependency of light emitted by the device 110 and hitting this pixel. Thus the spectra for all pixels analysed can be compared with each other. As the Fourier transform spectrometer 100 utilizes the interferometer 102 according to the invention the origin of the interferograms of different pixels are all the same, so that the Fourier transform calculation can be done without a complicated calibration of the device.

In a practical example of application the Fourier transform spectrometer according to the invention can be used to identify whether the spectrum at an edge of a display corresponds to the spectrum at a centre portion of the display.

However, the Fourier transform spectrometer can not only be used for imaging spectrometry, but also for non imaging spectrometry with the advantage of having an interferometer with a large view angle so that, compared to prior art spectrometers, more intensity can enter the spectrometer and therefore a higher sensitivity is attained.

For such applications a zero dimensional detector in combination with a cylindrical lens, collimating light in the y direction, can be used as the light sensitive detector 38. Thus, when looking at the intensity distribution of figure 3b, with such a detector system the intensity of one fringe is detected by the interferometer. This detected intensity is integrated over the y direction by the collimating effect of the cylindrical lens To obtain the Fourier transform the same method as abovementioned is applied, which consists in changing the position of the movable Wollaston prism 26 and measuring the corresponding intensity.

In a variant a one dimensional detector could be used as the light sensitive detector 38 with its pixels aligned in the y direction. Integration of the measured intensities then occurs numerically instead of optically.

According to the invention the calibration of the Fourier transform spectrometer 100 can be achieved in a relatively simple manner. It consists of moving the movably arranged polarizing beam splitter, in this example the first Wollaston prism 26, to different positions until a minimum amount of fringes is observed. In the case that the four polarizing beam splitters are matched such that the phase shift created in the first half of the Wollaston prisms is essentially compensated by the phase shift created in the second half of the Wollaston prisms a zero fringe pattern is obtained, like shown in Fig. 3a.

In the example shown in Fig. 3a, the calibration can therefore easily be achieved by detecting the zero fringe pattern. This position then corresponds to $x_0=0$ of the first Wollaston prism 26 and is the position for which the Wollaston prisms are symmetrically arranged. This position corresponds to the zero phase shift position for each pixel. In practice this calibration can be carried out by using a single wavelength laser or a lamp with known spectral features to further facilitate the surge for the zero fringe pattern.

Fig. 8 illustrates a fifth embodiment of an interferometer 120 according to the invention. Like with the other embodiments the fifth embodiment also provides an interferometer with a large angle of view, which can be as large as 25° or more. Elements with the same reference numerals as in the preceding Figures, related to the first to fourth embodiment, will not be explained again in detail and their earlier made description is incorporated herewith by reference. The interferometer 120 corresponds to a large part to the one of the first embodiment with the main difference that the first Wollaston prism 26 is not necessarily movably arranged and can therefore also be fixed.

Accordingly the interferometer 120 comprises, arranged along the axis 22, a first Wollaston prism 26, a second Wollaston prism 28, a third Wollaston prism 32, a fourth Wollaston prism 34 and a light sensitive detector 38. The first Wollaston prism is arranged off-axis with respect to the axis 22 in the direction x to create a certain quantity of phase shift dependency, like disclosed above with respect to Fig. 2b. However, also any other of the Wollaston prisms could be arranged off-axis with respect to the axis 22.

To be capable to analyse unpolarized light, the interferometer 20 can further comprise a polarizer 24, placed in front of the first Wollaston prism 26, to polarize light coming from a light source (not shown) and an analyser 36, placed behind the fourth Wollaston prism 34.

A half wave plate 30, preferably an achromatic half wave plate, is placed in between the second Wollaston prism 28 and the third Wollaston prism 32.

The light sensitive detector 38 detecting light interference patterns occurring due to phase shifts between the ordinary and extraordinary beams created inside the birefringent polarizing beam splitters 26, 28, 32, 34, is positioned on the axis 22 following the analyser 36. In this embodiment use is made of a two dimensional detector like a CCD detector with a two-dimensional array of pixels or of an one-dimensional detector. In a variant a cylindrical lens 122 is provided in front of the one dimensional detector.

All the structural changes proposed in embodiments two to four with respect to embodiment one can also be applied in the same manner to embodiment five and the features and corresponding descriptions of embodiments two to four are incorporated herewith by reference.

With the interferometer 120 according to the fifth embodiment an interference pattern with straight lines parallel to the y direction, as shown in Fig. 3b, is obtained, which is due to the fact that the Wollaston prism 26 is positioned off the axis 22 at a certain distance $x_1$. This spatially extended interference pattern, with its intensity modulation essentially in the x direction, contains the information necessary to obtain spectral information about the light entering the interferometer 120 by carrying out a Fourier transformation. Thus by combining the interferometer 120 with a means for carrying out a Fourier transform a Fourier transform spectrometer similar to the one described above, in relation with Fig. 7, is obtained. The features and their descriptions of the above described Fourier transform spectrometer are herewith incorporated by reference.

With such a Fourier spectrometer advantage is taken of the fact that the phase shift in y direction (see Fig. 3a) is essentially constant so that for a given x the intensities in the y direction can be integrated to thereby enhance the sensitivity of the device. Using a two dimensional detector the integration can be performed numerically. When a one dimensional detector is used the additional cylindrical lens 122 is placed in front of the detector 38 to integrate the intensities optically. The lens 122 is arranged such that it is collimating the light in the y direction onto the pixels of the one dimensional detector, which has its pixels arranged along the x direction.

Following the intensity integration in the y direction the Fourier transform can be carried out.

**Claims**

1. Interferometer comprising arranged along an axis (22):

   - first n birefringent polarizing beam splitters (26, 28), wherein n is a natural number larger than one, preferably two, which are placed in a polarized light beam (A, B, C) and which are configured such that the polarized light beam is split into a first and a second beam (A1, A2), which leave the $n^{th}$ polarizing beam splitter (28) essentially parallel to each other and at a first distance (d1) to each other,
   - second n birefringent polarizing beam splitters (32, 34), which are placed on the axis (22) following the first n birefringent polarizing beam splitters (26, 28) to receive the first and the second beam (A1, A2) and which are configured such that the first and the second beam (A1, A2) leave the last polarizing beam splitter (34) essentially parallel to each other but at a second distance to each other being smaller than the first distance, and
   - a light sensitive detector (38) for detecting light interference occurring due to phase shifts between the first and second beams (A1, A2), and

   wherein at least one polarizing beam splitter (26) of the first n and/or second n polarizing beam splitters (26, 28, 32, 34) is movably arranged in a direction (40a, 40b) perpendicular to the axis (22), to thereby change the phase shifts between the first and second beams (A1, A2), and
   wherein for at least one position of the at least one movably arranged polarizing beam splitter (26) the phase shifts created by the first n polarizing beam splitters (26, 28) and the corresponding phase shifts created by the second n polarizing beam splitters (32, 34) compensate each other at least partially.

2. Interferometer according to claim 1, wherein the 2n birefringent polarizing beams splitters (26, 28, 32, 34) are configured such that the first and second beams leave the $n^{th}$ polarizing beam splitter (28) and the last polarizing beam splitter (34) under essentially the same angles as the polarized beam enters the first polarizing beam splitter (26).

3. Interferometer according to claim 1 or 2, wherein at least one polarizing beam splitter (26, 28, 32, 34), in particular all the polarizing beam splitters (26, 28, 32, 34), is/are Wollaston prism(s).

4. Interferometer according to claim 3, wherein the Wollaston prisms (32, 34) of the first n polarizing beam splitters are made out of a same birefringent material and wherein the Wollaston prisms (32, 34) of the second n birefringent polarizing beam splitters are made out of a same birefringent material.

5. Interferometer according to one of claims 1 to 4, further comprising at least one polarization plane changing means (30), in particular a half wave plate.

6. Interferometer according to claim 5, wherein a polarization plane changing means (30) is positioned on the axis (22) such that the first n Wollaston prisms (26, 28) are to one side of the polarization plane changing means (30) and the second n Wollaston prisms (32, 34) are to the other side of the polarization changing means (30).

7. Interferometer according to claim 3 or 4, wherein the first n Wollaston prisms (26, 28) are made out of a first birefringent material and the second n Wollaston prisms (80, 82) are made out of a second birefringent material having birefringent properties of opposite sign compared to the first birefringent material.

8. Interferometer according to one of claims 3 to 7, wherein for n=2 the wedge angles ($\theta1$, $\theta3$) of the $1^{st}$ and $3^{rd}$ Wollaston prisms (26, 32) are essentially the same and the wedge angles ($\theta2$, $\theta4$) of the $2^{nd}$ and $4^{th}$ Wollaston prisms (28, 34) are essentially the same with respect to the axis, and wherein, in particular, the absolute value of all wedge angles ($\theta1$, $\theta2$, $\theta3$, $\theta4$) is essentially the same with respect to the axis (22).

9. Interferometer according to one of claims 1 to 8, wherein the light sensitive detector (38) comprises a plurality of pixels, in particular in a one dimensional or two dimensional manner, for detecting a spatially extended interference pattern.

10. Interferometer comprising arranged along an axis (22):

    - first n birefringent polarizing beam splitters (26, 28), wherein n is a natural number larger than one, preferably two, which are placed in a polarized light beam (A, B, C) and which are configured such that the polarized light beam (A, B, C) is split into a first and a second beam (A1, A2), which leave the $n^{th}$ polarizing beam splitter (28) essentially parallel to each other and at a first distance to each other,
    - second n birefringent polarizing beam splitters (32, 34), which are placed on the axis (22) following the first n birefringent polarizing beam splitters (26, 28) to receive the first and the second beam and which are configured such that the first and the second beam leave the last polarizing beam splitter (34) essentially parallel to each other but at a second distance to each other being smaller than the first distance, and

- a light sensitive detector (38) for detecting light interference occurring due to phase shifts between the first and second beams, and

wherein at least one of the first n and/or second n polarizing beam splitters (26, 28, 32, 34) is arranged off-axis with respect to the axis (22) along a first direction (x) such that phase shifts between the first and second beam are produced leading to interference fringes along the first direction (x), and wherein the first n and second n polarizing beam splitters (26, 28, 32, 34) are configured such that the phase shifts created by the first n polarizing beam splitters (26, 28) and the corresponding phase shifts created by the second n polarizing beam splitters (32, 34) compensate each other at least partially such that no interference fringes are produced along a second direction (y), being perpendicular to the first direction and the axis (22).

11. Fourier transform spectrometer comprising the interferometer according to one of claims 1 to 10 and a means for carrying out a Fourier transform (106).

12. Fourier transform spectrometer according to claim 11, further comprising means for storing (104) the interference obtained for a plurality of different positions of the at least one movably arranged birefringent polarizing beam splitter (26).

13. Fourier transform spectrometer according to claim 11 or 12 in combination with claim 9, wherein the means for carrying out the Fourier transform (106) is configured such that a Fourier transform is determined for at least two pixels, in particular at least one pixel in a center region of the light sensitive detector (38) and at least one pixel in an edge region of the light sensitive detector (38).

14. Method for calibrating a Fourier transform spectrometer according to one of claims 11 to 13, comprising the step of moving the at least one movably arranged polarizing beam splitter (26) to a different position until a minimum amount of fringes, in particular no fringe, is detected by the light sensitive detector (38).

15. Use of a Fourier transform spectrometer according to one of claims 11 to 13, for analysing a punctual light source or an extended light source at finite or

infinite distance.

Fig.1

Fig.2b

Fig.2a

Fig.3a

Fig.3b

Fig.3c

Fig.4

Fig.5

Fig.6

Fig.7

Fig.8

**European Patent Office**

## EUROPEAN SEARCH REPORT

Application Number

EP 04 29 1290

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | WO 2004/005870 A (BEALE JOHN EDWARD PERRIGO ; FLETCHER-HOLMES DAVID WILLIAM (GB); QINETI) 15 January 2004 (2004-01-15) * page 10, line 20 - line 21; claims 1-3,8-10 * * figures 2,3 * ----- | 1-15 | G01J3/28 G01J3/453 |
| X | US 6 519 040 B1 (AMOS WILLIAM BRADSHAW) 11 February 2003 (2003-02-11) * column 2, line 61 - column 3, line 3 * ----- | 14 | |

TECHNICAL FIELDS SEARCHED (Int.Cl.7)

G01J

The present search report has been drawn up for all claims

| Place of search | Date of completion of the search | Examiner |
|---|---|---|
| The Hague | 18 October 2004 | Rasmusson, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 29 1290

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2004

| Patent document cited in search report | | Publication date | Patent family member(s) | | Publication date |
|---|---|---|---|---|---|
| WO 2004005870 | A | 15-01-2004 | WO | 2004005870 A1 | 15-01-2004 |
| US 6519040 | B1 | 11-02-2003 | AU | 8548598 A | 22-02-1999 |
| | | | CA | 2298562 A1 | 11-02-1999 |
| | | | CN | 1265738 T | 06-09-2000 |
| | | | EP | 1000329 A1 | 17-05-2000 |
| | | | WO | 9906807 A1 | 11-02-1999 |
| | | | JP | 2001512232 T | 21-08-2001 |

EPO FORM P0459

For more details about this annex : see Official Journal of the European Patent Office, No. 12/82